# DEMANDE DE BREVET EUROPEEN

(11) **EP 1 172 669 A1**
(43) Date de publication de la demande: **16.01.2002**
(21) Numéro de dépôt: 01401711.5
(22) Date de dépôt: 27.06.2001
(51) Int. Cl.: G01W 1/17

(54) **Procédé et dispositif de mesure de la température de la peau d'un occupant d'un local tel qu'un habitacle de véhicule automobile**

(30) Priorité: 11.07.2000 FR 0009060
(71) Demandeur: Peugeot Citroen Automobiles SA, 92200 Neuilly sur Seine (FR)
(72) Inventeur: Benasser, Lakhdar, 92170 Vanves (FR); Riat, Jean-Christophe, 95870 Bezons (FR)
(74) Mandataire: Bouget, Lucien

(57) **Abrégé**

On mesure une température d'un composant (2) disposé dans le local (7) présentant des caractéristiques d'échange thermique analogues aux caractéristiques d'échange thermique de la peau d'un occupant du local (7). On règle un flux thermique d'échange entre le composant (2) disposé dans le local (7) et l'air à l'intérieur du local (7), à une valeur fixe prédéterminée, par un apport de chaleur régulé au composant (2). Le dispositif de mesure comporte le composant (2), un dispositif d'apport de chaleur (3) tel qu'une résistance chauffante et un capteur de flux thermique (4) associé au composant (2) ainsi qu'un module de commande électronique (10) relié au capteur de flux thermique (4) de manière à recevoir un signal représentatif du flux thermique mesuré et à une alimentation régulée (5) du dispositif d'apport de chaleur (3).

## Description

L'invention concerne un procédé et un dispositif de mesure de la température de la peau d'un occupant d'un local, tel qu'un habitacle de véhicule automobile.

Pour assurer la climatisation d'un local tel qu'un habitacle de véhicule automobile, on peut utiliser un climatiseur automatique qui est commandé en fonction d'informations fournies par des capteurs, de manière à élaborer un programme d'injection d'air dans l'habitacle assurant aux passagers un niveau de confort thermique satisfaisant.

Les moyens utilisés pour commander l'injection d'air de chauffage ou de climatisation dans l'habitacle du véhicule automobile comportent des sondes de mesure fournissant des informations liées à la marche du véhicule automobile (par exemple la température d'eau du moteur du véhicule, de l'évaporateur, de l'air soufflé dans l'habitacle ou encore la vitesse du véhicule), ou encore des informations liées aux conditions climatiques régnant dans la zone où l'on utilise le véhicule automobile (par exemple la température extérieure ou l'ensoleillement).

Parmi les informations utilisées pour la commande d'un climatiseur automatique d'un local tel qu'un véhicule automobile, la température de peau d'un occupant du local est une information dont l'exploitation permet d'affiner la commande du climatiseur par l'intermédiaire de son régulateur, pour assurer un meilleur confort aux occupants du local, du fait que cette information est directement liée à l'état thermique des occupants du local.

On a donc proposé de mesurer la température de peau des occupants d'un local traduisant l'état thermique des occupants, de manière à assurer la climatisation du local. Bien entendu, il est nécessaire de réaliser cette mesure de la température de peau des occupants en temps réel, sans gêner les occupants du local.

En particulier, dans le cas d'un habitacle de véhicule automobile, on a proposé de mesurer la température de peau d'un passager du véhicule, sur une partie de la tête du passager du véhicule. Pour cela, on peut utiliser un capteur infrarouge. Le capteur infrarouge doit être placé dans une position suffisamment proche du passager et être orienté vers le passager, afin que les mesures de température ne soient pas perturbées par les flux thermiques émanant des parois de l'habitacle. De ce fait, il est très difficile de concevoir un capteur infrarouge et de placer le capteur dans une partie de l'habitacle du véhicule automobile pour remplir les conditions nécessaires pour obtenir une mesure représentative de la température de peau de la tête du passager, tout en évitant de gêner le passager sur lequel on effectue la mesure. En outre, la disposition d'un capteur de mesure de température dans l'habitacle du véhicule automobile peut poser des problèmes en ce qui concerne l'obtention ou la préservation d'un aspect esthétique satisfaisant de l'habitacle du véhicule.

Dans le brevet EP-0.214.294, on a proposé un système de mesure de la température de peau des occupants d'une habitation qui permet d'effectuer des mesures sans gêner les occupants sur lesquels on effectue ces mesures. On utilise pour cela un composant qui présente des caractéristiques thermiques analogues ou proches de celles de la peau humaine ou de vêtements recouvrant la peau des occupants de l'habitation. On fournit au composant une puissance fixe qui peut être de 86 ou 101 W/m² et on mesure la température du composant, ce qui fournit une valeur approchée de la température de peau ou de la température des vêtements des occupants de l'habitation.

Ce dispositif qui permet d'obtenir une valeur approchée de la température de peau sans gêner les occupants de l'habitation présente l'inconvénient de ne pas prendre en compte le flux de chaleur effectivement perdu par le composant dont on réalise le chauffage à puissance fixe.

Le corps humain produit naturellement de la chaleur qui est évacuée au travers de la peau, de manière à assurer au corps une température interne constante proche de 37°C. En fait, le corps humain échange un flux de chaleur constant avec l'extérieur, ce flux de chaleur étant de l'ordre de 100 W/m². Si les conditions climatiques du milieu dans lequel se trouve le corps humain sont modifiées, la température de peau change également, de telle sorte que le flux de chaleur échangé entre le corps humain et l'air extérieur reste sensiblement constant et égal à 100 W/m². Un dispositif de mesure tel que décrit dans le EP-0.214.294 échange avec l'air extérieur, un flux de chaleur variable et n'est donc pas parfaitement représentatif d'une partie partie du corps humain car la puissance électrique délivrée au composant est fixe et ne varie pas avec les conditions climatiques du local. La température mesurée du composant n'est donc pas parfaitement représentative de la température de peau des occupants du local ou de l'habitation.

Le but de l'invention est donc de proposer un procédé de mesure de la température de la peau d'un occupant d'un local, tel qu'un habitacle de véhicule automobile, par mesure d'une température d'un composant disposé dans le local présentant des caractéristiques d'échange thermique analogues aux caractéristiques d'échange thermiques d'une partie de la peau de l'occupant du local, ce procédé permettant de fournir une mesure bien représentative de la température de peau de l'occupant en temps réel, sans gêner l'occupant du local.

Dans ce but, on règle un flux thermique d'échange entre le composant et l'air du local à une valeur fixe prédéterminée, par un apport de chaleur régulée au composant.

L'invention est également relative à un dispositif de mesure de la température de la peau d'un occupant d'un local tel qu'un habitacle de véhicule automobile comportant un composant disposé dans le local présentant des caractéristiques d'échange thermique analogues aux caractéristiques d'échange thermique de la peau de l'occupant du local et un moyen de mesure de la température du composant, ce dispositif permettant de réaliser en temps réel des mesures parfaitement représentatives de la température de la peau de l'occupant du local, sans aucune gêne pour l'occupant.

Dans ce but, le dispositif suivant l'invention comporte :
- un capteur de flux thermique en contact avec une surface du composant,
- un dispositif d'apport de chaleur au composant, et
- une unité de réglage de l'apport de chaleur au composant, de manière à maintenir un flux thermique d'échange entre le composant et l'air du local, mesuré par le capteur de flux thermique, à une valeur fixe prédéterminée.

Afin de bien faire comprendre l'invention, on va maintenant décrire, en se référant aux figures jointes en annexe, un dispositif de mesure suivant l'invention et suivant deux variantes de réalisation, et sa mise en oeuvre pour mesurer la température de peau d'un passager d'un véhicule automobile.

La figure 1 est une vue schématique d'un dispositif de mesure suivant l'invention et suivant un premier mode de réalisation.

La figure 2 est une vue schématique d'un dispositif de mesure suivant l'invention et suivant un second mode de réalisation.

Comme il a été rappelé plus haut, il est connu que l'équilibre thermique du corps humain est réalisé par échange avec le milieu extérieur, d'un flux thermique voisin de 100 W/m².

Les conditions d'échange avec le milieu extérieur dépendent en particulier de la température de l'air ambiant, de la vitesse de l'air au contact de la peau (air immobile ou air en circulation), de l'humidité de l'air et de la température de surfaces au contact ou au voisinage de la peau.

La température de la peau à travers laquelle se produit la déperdition thermique en provenance du corps humain s'établit à une certaine valeur qui est représentative d'un état thermique de la personne soumise à l'ambiance extérieure.

Ces considérations connues ont été utilisées de manière nouvelle et originale pour mettre en oeuvre un procédé et un dispositif de mesure de la température de peau d'un occupant d'un local.

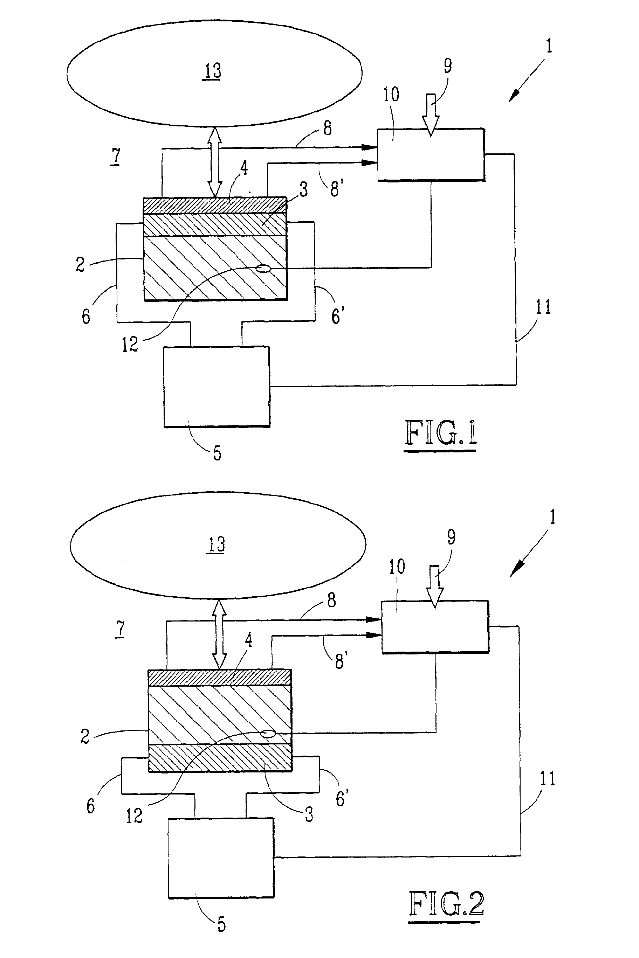

Sur la figure 1, on a représenté de manière schématique un dispositif de mesure suivant l'invention désigné de manière générale par le repère 1.

Ce dispositif de mesure peut être utilisé en particulier pour mesurer la température de peau de passagers d'un véhicule automobile.

Le dispositif de mesure 1 comporte principalement un composant 2 qui est adapté pour présenter des propriétés d'échange thermique avec l'air ambiant de l'habitacle du véhicule automobile les plus proches possible des conditions d'échange thermique d'une partie de la peau de la tête d'un passager du véhicule automobile.

Le composant 2 est placé dans une zone de l'habitacle du véhicule automobile dans laquelle les échanges thermiques sont sensiblement les mêmes que ceux qui se produisent avec la tête d'un passager du véhicule automobile.

Comme il sera expliqué plus loin, le composant 2 peut être réalisé avec des dimensions faibles et en particulier avec une faible épaisseur, ce qui permet de le placer sans difficulté dans une zone quelconque de l'habitacle du véhicule automobile, par exemple sur une partie d'un siège du véhicule automobile.

Le composant 2 doit présenter des propriétés thermiques d'échange les plus proches possible de la peau humaine. On peut utiliser par exemple un mélange d'eau et d'agar-agar qui se présente sous forme gélifiée et qui peut être placé dans une enveloppe de forme et de dimensions quelconques qui ne modifie pas sensiblement les propriétés d'échange thermique du composant 2 avec le milieu extérieur.

Pour la mise en oeuvre du procédé suivant l'invention, on associe au composant 2 dont les propriétés d'échange thermique sont celles de la peau humaine, une résistance chauffante 3 et un capteur de mesure de flux thermique ou fluxmètre 4.

La résistance chauffante 3 peut être réalisée sous la forme d'une plaquette, par exemple une plaquette support sur laquelle est fixé ou dans laquelle est intégré un élément métallique en alliage pour résistance chauffante.

La résistance chauffante 3 est reliée, par l'intermédiaire de conducteurs électriques 6 et 6' à une alimentation électrique régulée 5 permettant de faire passer, dans la résistance électrique chauffante 3, un courant électrique d'intensité i produisant de la chaleur par effet Joule. Le réglage de l'intensité du courant i permet de régler l'apport de chaleur de la résistance 3 au composant 2.

Dans le cas du premier mode de réalisation représenté sur la figure 1, la résistance chauffante 3 est fixée sur une surface supérieure ou externe du composant 2 et, dans le cas du second mode de réalisation représenté sur la figure 2, la résistance chauffante 3 est fixée sur une surface inférieure ou interne du composant 2.

Sur la surface externe de la résistance chauffante 3, dans le cas du premier mode de réalisation ou sur la surface externe du composant 2 dans le cas du second mode de réalisation, est fixé un capteur de flux thermique ou fluxmètre 4 permettant de mesurer de manière précise le flux thermique échangé entre le milieu extérieur 7 constitué par l'air ambiant de l'habitacle du véhicule automobile et le composant 2 recevant un apport de chaleur par l'intermédiaire de la résistance 3.

On connaît des capteurs de flux thermiques ou fluxmètres ayant une surface comprise entre quelques dizaines de mm² et quelques dizaines de cm², par exemple entre 25 mm² et 25 cm².

L'épaisseur des capteurs qui sont fixés, par exemple, par collage ou par sertissage sur le composant 2 est sensiblement inférieure à 1 mm et par exemple inférieure à 0,3 mm.

De tels capteurs de flux thermiques sont constitués par des éléments thermoélectriques répartis suivant la surface du capteur et comportent au moins un thermocouple permettant de mesurer la température du capteur.

Le flux thermique reçu ou libéré par le capteur dans le milieu ambiant est mesuré sous la forme d'une tension prélevée aux bornes du capteur.

Comme capteurs de flux thermique, on peut utiliser, par exemple, des capteurs de flux thermique CAPTEC, référence 300, de la société Captec Entreprise.

De tels capteurs permettent de mesurer des flux thermiques échangés avec le milieu extérieur avec une précision de ± 0,1 W/m² et la température du capteur avec une précision de ± 0,1°C.

Le fluxmètre 4 réalisé sous la forme d'une plaquette de petites dimensions et de faible épaisseur dont la surface est sensiblement égale à la surface externe du composant 2 peut être fixé par collage sur la résistance électrique 3 ou le composant 2. Le fluxmètre 4 présente deux bornes de sortie qui sont reliées par des conducteurs électriques 8 et 8' à un module de commande et de mesure 10, de manière que le module 10 reçoive un signal de tension représentatif du flux thermique Φ échangé par le composant 2 associé à la résistance chauffante 3, avec le milieu extérieur 7 constitué par l'air ambiant de l'habitacle du véhicule automobile.

Le signal de tension représentatif du flux thermique Φ est traité par le module de commande 10, soit sous forme analogique soit sous forme numérique, après numérisation à l'entrée dans le module de commande 10.

Le module de commande 10 reçoit une donnée d'entrée 9 qui est un signal représentatif du flux thermique constant d'échange entre un corps humain et le milieu extérieur. Ce signal d'entrée peut être représentatif par exemple d'un flux d'échange thermique de 100 W/m².

La comparaison du signal de flux mesuré par le fluxmètre 4 avec le signal d'entrée 9 constituant le signal de consigne permet d'élaborer un signal de commande d'intensité qui est transmis par un conducteur électrique 11 à une unité de commande de l'alimentation électrique régulée 5 de la résistance électrique 3.

L'intensité i du courant électrique circulant dans la résistance chauffante 3 est réglée à chaque instant, de manière à maintenir constant et à une valeur de l'ordre de 100 W/m², le flux thermique échangé par le composant 2 avec le milieu ambiant 13 à l'intérieur du local 7.

Dans le cas du premier, comme dans le cas du second mode de réalisation, le fluxmètre 4 mesure la valeur instantanée du flux thermique échangé par l'ensemble constitué par le composant 2 et la résistance chauffante 3, avec le milieu ambiant 13.

Un dispositif de mesure de température 12 tel qu'un thermocouple est noyé à l'intérieur du composant 2, de manière à fournir une tension électrique représentative de la température instantanée du composant 2. Le thermocouple 12 peut être relié au module de commande et de mesure 10 qui comporte des moyens de traitement du signal de température, par exemple pour transmettre le signal de température à une unité de commande d'un climatiseur de l'habitacle du véhicule automobile ou pour fournir et afficher une valeur instantanée de la température de peau simulée par le composant 2.

La température est directement obtenue à partir d'un thermocouple intégré au composant du dispositif de mesure, de sorte qu'on n'effectue pas de traitement du signal de mesure de température.

Les mesures de température de peau effectuées par le dispositif de mesure selon l'invention présentent une grande précision et prennent en compte des éléments tels que les parois de l'habitacle, du fait que le module de commande modifie de manière continue le courant de chauffage du composant pour réguler le flux thermique émis par le composant dans le milieu ambiant.

On obtient ainsi un signal de température tout à fait représentatif de la température de peau de la tête des occupants du véhicule automobile.

Du fait du faible encombrement du composant, de la résistance de chauffage et du fluxmètre qui sont accolés, cet ensemble peut être fixé très facilement dans un endroit quelconque de l'habitacle. L'intégration du dispositif de mesure à l'habitacle du véhicule automobile impose ainsi beaucoup moins de contraintes que dans le cas d'un capteur qui doit être dirigé vers la tête des occupants du véhicule automobile.

Bien entendu, on choisira, pour placer le composant dans l'habitacle, un emplacement dans lequel les échanges thermiques sont les plus proches possibles des échanges thermiques de la tête des passagers avec le milieu ambiant.

Du fait de la régulation précise du flux thermique émis par le composant, le dispositif selon l'invention fournit une très bonne simulation des échanges thermiques entre une partie d'un corps humain et un milieu ambiant à travers la peau recouvrant cette partie du corps humain.

La température mesurée ou le signal de température obtenu par le dispositif de l'invention peut être utilisée pour réguler de manière très précise et très efficace un climatiseur d'un local tel que l'habitacle d'un véhicule automobile.

L'invention ne se limite pas aux modes de réalisation qui ont été décrits.

C'est ainsi que le composant ayant des caractéristiques thermiques analogues à la peau humaine peut être associé à un moyen de chauffage disposé de manière quelconque par rapport au composant, ce moyen de chauffage pouvant être différent d'une résistance chauffante fixée sur un support accolé au composant.

De même, le fluxmètre peut être placé d'une manière différente de celles qui ont été décrites, à partir du moment où le fluxmètre est traversé par le flux thermique d'échange entre le composant et le milieu ambiant.

Le composant ayant des caractéristiques thermiques d'échange analogues à la peau humaine peut être constitué par un matériau différent d'un mélange d'eau et d'agar-agar. Ce composant peut être constitué de n'importe quel matériau, à condition de choisir une épaisseur telle que le comportement thermique du matériau soit analogue à celui de la peau.

Bien que l'invention connaisse des applications particulièrement intéressantes dans le domaine de la climatisation des habitacles de véhicule automobile, d'autres applications peuvent être envisagées, par exemple, dans le domaine du chauffage ou de la climatisation de locaux d'habitation.

## Revendications

1. Procédé de mesure de la température de peau d'un occupant d'un local (7) tel qu'un habitacle de véhicule automobile, par mesure d'une température d'un composant (2) disposé dans le local (7) présentant des caractéristiques d'échange thermique analogues aux caractéristiques d'échange thermique d'une partie de la peau de l'occupant du local (7), **caractérisé par le fait qu'**on règle un flux thermique d'échange entre le composant (2) et l'air du local (7) à une valeur fixe prédéterminée par un apport de chaleur régulé au composant (2).

2. Procédé de mesure suivant la revendication 1, **caractérisé par le fait qu'**on règle le flux thermique d'échange à une valeur fixe prédéterminée voisine de 100 W/m².

3. Procédé de mesure suivant l'une quelconque des revendications 1 et 2, **caractérisé par le fait qu'**on place le composant (2) à l'intérieur d'un habitacle de véhicule automobile (7) dans une zone dans laquelle les échanges thermiques du composant (2) avec l'air de l'habitacle du véhicule automobile sont analogues aux échanges thermiques entre la tête d'un passager du véhicule automobile et l'air à l'intérieur de l'habitacle du véhicule automobile.

4. Procédé suivant l'une quelconque des revendications 1 à 3, **caractérisé par le fait qu'**on utilise la mesure de la température du composant (2) pour réguler un climatiseur du local (7).

5. Dispositif de mesure de la température de la peau d'un occupant d'un local (7) tel qu'un habitacle de véhicule automobile, comportant un composant disposé dans le local (7) présentant des caractéristiques d'échange thermique analogues aux caractéristiques d'échange thermique d'une partie de la peau de l'occupant du local (7) et un moyen de mesure (12) de la température du composant (2), **caractérisé par le fait qu'**il comporte de plus :
- un capteur de flux thermique (4) en contact avec une surface externe d'échange du composant (2),
- un dispositif d'apport de chaleur (3) au composant (2), et
- une unité (10) de réglage de l'apport de chaleur au composant (2), de manière à maintenir un flux thermique d'échange entre le composant (2) et l'air du local (7) mesuré par le capteur de flux thermique (4), à une valeur fixe prédéterminée.

6. Dispositif suivant la revendication 5, **caractérisé par le fait que** le composant (2) est réalisé en un matériau constitué par un mélange d'eau et d'agar-agar.

7. Dispositif suivant l'une quelconque des revendications 5 et 6, **caractérisé par le fait que** le dispositif d'apport de chaleur (3) au composant (2) est constitué par une résistance de chauffage (3) fixée sur l'une des surfaces interne ou externe du composant (2).

8. Dispositif suivant l'une quelconque des revendications 5, 6 et 7, **caractérisé par le fait que** l'unité de réglage (9) de l'apport de chaleur au composant (2) est constitué par un module électronique de commande relié par des conducteurs électriques (8, 8') au capteur de flux thermique (4), de manière à recevoir un signal représentatif d'un flux thermique (Φ) mesuré par le capteur de flux thermique (4) et comportant des moyens de comparaison du signal représentatif du flux thermique (Φ) mesuré par le capteur de flux thermique (4) avec une valeur de consigne (9) et des moyens d'élaboration, à partir de la comparaison du flux thermique mesuré et de la valeur de consigne, d'un signal de commande de l'intensité (i) d'un courant électrique d'alimentation d'une résistance de chauffage (3) assurant un apport de chaleur au composant (2).

9. Dispositif suivant l'une quelconque des revendications 5 à 8, **caractérisé par le fait que** le capteur de flux thermique (4) est fixé sur une surface extérieure d'un dispositif d'apport de chaleur (3) lui-même fixé sur une surface externe du composant (2).

10. Dispositif suivant l'une quelconque des revendications 5 à 8, **caractérisé par le fait que** le capteur de flux thermique (4) est fixé sur une surface externe du composant (2) exposée au milieu ambiant (13) du local (7).
